# EUROPÄISCHE PATENTSCHRIFT

(11) **EP 2 644 417 B1**
(45) Veröffentlichungstag und Bekanntmachung des Hinweises auf die Patenterteilung: **08.04.2015**
(21) Anmeldenummer: 13000497.1
(22) Anmeldetag: 01.02.2013
(51) Int. Cl.: B60G 17/017, B60G 17/052, B60G 17/015

(54) **Verfahren zur Niveauregelung eines luftgefederten Kraftfahrzeugs**
Method for the level adjustment of a motor vehicle with pneumatic suspension
Procédé de réglage du niveau d'un véhicule automobile à suspension pneumatique

(30) Priorität: 29.03.2012 DE 102012006468
(43) Veröffentlichungstag der Anmeldung: 02.10.2013
(73) Patentinhaber: WABCO GmbH, 30453 Hannover (DE)
(72) Erfinder: Albers, Jürgen, 31582 Nienburg (DE); Bartel, Siegfried, 30890 Barsinghausen (DE); Gocz, Reinhard, 30926 Seelze (DE); Jovers, Ingo, 30989 Gehrden (DE)

(56) Entgegenhaltungen:
- EP-A2- 0 315 458
- EP-A2- 0 544 484
- EP-B1- 0 779 166
- EP-B1- 1 925 471
- WO-A1-98/35845
- WO-A2-94/00307
- DE-A1- 3 715 441
- DE-B4- 19 539 887
- US-A- 5 083 275
- US-A1- 2005 093 265

## Beschreibung

Die Erfindung betrifft ein Verfahren zur Niveauregelung eines luftgefederten Kraftfahrzeugs, beispielsweise eines Omnibusses, das eine luftgefederte Vorderachse und mindestens eine luftgefederte Hinterachse sowie eine vordere Einstiegstür und mindestens eine hintere Einstiegstür aufweist, und bei dem mehrere zwischen Fahrwerkselementen der Fahrzeugachsen und dem Fahrzeugaufbau angeordnete Luftfederbälge zur Regelung eines Soll-Niveaus über als Schaltventile ausgebildete Niveauregelventile jeweils beim Unterschreiten einer unteren Toleranzgrenze belüftet und beim Überschreiten einer oberen Toleranzgrenze entlüftet werden, wobei beim Vorliegen eines bestimmten Betriebszustands zumindest eine der beiden Toleranzgrenzen der Luftfederbälge mindestens einer Fahrzeugachse oder einer Fahrzeugseite verändert wird.

Luftfederungsanlagen weisen gegenüber konventionellen Stahlfederungen wesentliche Vorteile auf und kommen daher zunehmend sowohl bei Nutzfahrzeugen, wie Lastkraftwagen und Omnibussen, als auch bei vorzugsweise schweren Personenkraftfahrzeugen, wie Oberklasselimousinen und Geländefahrzeugen, zur Anwendung. So ermöglicht eine Luftfederungsanlage eine beladungsunabhängige Niveauregelung, da der aktuelle Beladungszustand jeweils durch eine Anpassung des Balgdruckes in den Luftfederbälgen ausgeglichen werden kann. Ebenso bietet eine Luftfederungsanlage aufgrund der progressiven Federkennlinien der Luftfedern einen besonders sicheren Fahrbahnkontakt der Räder und ein komfortables Ansprechverhalten beim Aus- und Einfedern der Räder. Ein weiterer Vorteil von Luftfederungsanlagen besteht darin, dass die Bodenfreiheit der betreffenden Fahrzeuge bedarfsweise verändert werden kann, z.B. für einen Offroad-Einsatz erhöht und für eine Schnellfahrt auf der Autobahn verringert werden kann. Bei Nutzfahrzeugen kommt hinzu, dass der Fahrzeugaufbau zum Be- und Entladen abgesenkt oder auf eine geeignete Höhe eingestellt werden kann. So kann beispielsweise der Fahrzeugrahmen eines luftgefederten Lastkraftwagens oder Anhängers zum Absetzen einer Wechselpritsche abgesenkt und zu deren Aufnahme wieder angehoben werden. Ebenso kann der Ladeboden eines Lastkraftwagens zur Erleichterung des Be- und Entladens durch Absenken oder Erhöhen des Balgdruckes an der Hinterachse auf das Niveau einer Laderampe eingestellt werden. Bei luftgefederten Omnibussen kann der Fahrzeugaufbau zur Erleichterung des Ein- und Aussteigens der Fahrgäste durch Ablassen der Druckluft aus den fahrbahnäußeren Federbälgen einseitig abgesenkt und anschließend durch eine Befüllung der Federbälge wieder angehoben werden. Diese Funktion ist auch als kneeling oder easy entry bekannt.

Zur Niveauregelung eines entsprechenden Kraftfahrzeugs mittels Wegsensoren, die beidseitig jeweils zwischen den Fahrzeugachsen oder Aufhängungselementen der Fahrzeugachsen und dem Fahrzeugaufbau angeordnet sind, wird das jeweilige Ist-Niveau des Fahrzeugaufbaus in Bezug zur Fahrzeugachse erfasst und in einem Steuergerät mit dem vorgegebenen und dort abgespeicherten Soll-Niveau verglichen. Wenn die jeweils einem der beidseitig an den Fahrzeugachsen angeordneten Luftfederbälge zugeordneten Niveauregelventile, wie vorliegend vorgesehen, als Schaltventile, genauer gesagt als 2/2-Wege-Schaltventile ausgebildet sind, erfolgt die Niveauregelung bekanntlich dadurch, dass der betreffende Luftfederbalg bei Unterschreiten einer unteren Toleranzgrenze durch das Öffnen des zugeordneten Niveauregelventils mit einer druckführenden Hauptleitung verbunden und dadurch belüftet wird, sowie bei Überschreiten einer oberen Toleranzgrenze durch das Öffnen des zugeordneten Niveauregeventils mit der dann drucklosen Hauptleitung verbunden und dadurch entlüftet wird. Damit die Hauptleitung, wie es gerade erforderlich ist, druckführend oder drucklos ist, wird diese jeweils zuvor, beispielsweise über ein als ein 3/2-Wege-Schaltventil ausgebildetes Hauptschaltventil, mit einer Druckluftquelle, wie z.B. einem Druckspeicher oder der Druckleitung eines Kompressors, oder mit einer Druckluftsenke, wie z.B. einer über einen Schalldämpfer mit der Umgebung verbundenen Drucklosleitung verbunden. Durch die Berücksichtigung der beiden Toleranzgrenzen wird vermieden, dass die Luftfederbälge bei der geringsten Abweichung zwischen dem jeweiligen Ist-Niveau und dem vorgegebenen Soll-Niveau wechselweise belüftet oder entlüftet werden, was für die Fahrzeuginsassen komfortmindernd und zudem mit einem erhöhten Druckluftverbrauch verbunden wäre.

Der Aufbau einer entsprechenden Luftfederungsanlage und die Funktionsweise einer derartigen Niveauregelung sind beispielsweise in der EP 0 779 166 B1 und in der Druckschrift "ECAS für Busse, Systembeschreibung, WABCO, 2008" der WABCO Fahrzeugsysteme GmbH, Hannover, ausführlich beschrieben. Die letztere Druckschrift ist unter Nutzung der Adresse www.wabco-auto.com/intl/pdf/815/00/29/8150200293.pdf aus dem Internet beziehbar.

Die Toleranzgrenzen der Luftfederbälge sind üblicherweise fahrzeugspezifisch festgelegt und stellen einen Kompromiss zwischen einem sicheren Fahrverhalten und einem hohen Fahrkomfort dar. Es ist jedoch auch möglich, diese Toleranzgrenzen bei Auftreten bestimmter Betriebszustände in geeigneter Weise abzuändern.

So ist beispielsweise in der DE 195 39 887 B4 ein Verfahren zur Niveauregelung eines luftgefederten Kraftfahrzeugs, insbesondere eines Lastkraftwagens beschrieben, bei dem entweder eine Zeitverzögerung der Niveauregelung aktiviert oder durch das Anheben der oberen Toleranzgrenze und das Absenken der unteren Toleranzgrenze das Regelungs-Totband der Niveauregelung vergrößert wird, wenn das Kraftfahrzeug nicht bewegt werden kann. Hierdurch soll verhindert werden, dass während eines Ladevorgangs an einer Fahrzeugachse kurzfristig auftretende Abweichungen des Ist-Niveaus vom Soll-Niveau, die beispielsweise von der Auf- und Abfahrt eines relativ schweren Gabelstaplers auf die oder von der Ladefläche verursacht werden können, korrigiert werden. Der betreffende Betriebszustand des Kraftfahrzeugs kann anhand des abgestellten Antriebsmotors ermittelt werden.

Das US-Patent US5083275 beschreibt ein Luftfedersystem für ein Fahrzeug mit unterschiedlichen Sollhöhenniveaus des Fahrzeugaufbaus gegenüber der Fahrbahn, welche in Abhängigkeit der Fahreigenschaften des Fahrzeugs ausgewählt werden. Während der Fahrt des Fahrzeugs wird ein anderes Sollhöhenniveau als im Stand des Fahrzeugs ausgewählt.

Die DE 37 15 441 A1 offenbart ein weiteres relevantes Höhensteuersystem für ein Kraftfahrzeug, dass die Bodenfreiheit des Fahrgstells regeln kann, um das Fahrrerhalten und dem Fahrkomfort zu verbessern.

Aus der EP 0 779 166 B1 ist ein Verfahren zur Niveauregelung eines luftgefederten Kraftfahrzeugs bekannt, bei dem beim Auftreten einer Schiefstellung des Fahrzeugaufbaus an einer Fahrzeugachse die Korrektur der Schiefstellung gegebenenfalls abgebrochen wird. Die Korrektur der Schiefstellung erfordert das Belüften der Luftfeder(n) auf der Seite des abgesenkten Fahrzeugaufbaus und das Entlüften der Luftfeder(n) auf der Seite des angehobenen Fahrzeugaufbaus. Da dies durch wechselseitiges Umschalten der Verbindung der Hauptleitung mit der Druckluftquelle und der Druckluftsenke erfolgt, ist vorgesehen, dass die Anzahl der entgegengesetzten Regelspiele erfasst und bewertet wird. Bei Überschreiten einer vorgegebenen Anzahl entgegengesetzter Regelspiele werden die Soll-Niveaus der betreffenden Fahrzeugachse(n) unter entsprechen-der Verschiebung der jeweiligen oberen und unteren Toleranzgrenzen gleich den aktuellen Ist-Niveaus gesetzt. Hierdurch soll die Überschreitung einer maximalen Druckdifferenz in den Luftfedern einer Fahrzeugachse und die Unterschreitung eines Mindestdruckes in einer der Luftfedern ohne die Verwendung von Drucksensoren vermieden werden.

Schließlich ist in der EP 1 925 471 B1 ein Verfahren zur Niveauregelung eines luftgefederten Kraftfahrzeugs beschrieben, bei dem während der Fahrt die Querbeschleunigung des Kraftfahrzeugs erfasst und die Toleranzgrenzen der kurveninneren und kurvenäußeren Luftfedern in Abhängigkeit von der Querbeschleunigung unterschiedlich verändert werden. So ist nach diesem Verfahren vorgesehen, dass die obere Toleranzgrenze der kurveninneren Luftfederbälge mit zunehmender Querbeschleunigung weiter angehoben wird als bei den kurvenäußeren Luftfederbälgen, und dass die untere Toleranzgrenze der kurvenäußeren Luftfederbälge mit zunehmender Querbeschleunigung weiter abgesenkt wird als bei den kurveninneren Luftfederbälgen. Durch die asymmetrische Verschiebung der Toleranzgrenzen für die Luftfedern einer Fahrzeugachse wird einer Querneigung des Fahrzeugaufbaus entgegengewirkt und entgegengerichtete Regelvorgänge vermieden.

Der vorliegenden Erfindung liegt demgegenüber das Problem zu Grunde, dass sich bei Stadtbussen wie auch bei Überland- und Reisebussen beim Ein- und Aussteigen von Fahrgästen eine kurzfristige Absenkung bzw. Anhebung des Fahrzeugaufbaus ergibt, die an sich nicht ausgeregelt werden müsste, solange diese Schwankungen des Fahrzeugaufbaus und damit der Höhe der Trittschwellen an den Einstiegstüren von den Fahrgästen nicht als unangenehm oder sogar gefährlich wahrgenommen werden. Es hat sich allerdings gezeigt, dass die Höhenschwankungen der Trittschwelle besonders an der vorderen Einstiegstür als störend empfunden werden, wenn diese entsprechend der Niveauregelung während der Fahrt nicht unmittelbar korrigiert werden. Dies kann unter anderem damit erklärt werden, dass das Einsteigen der Fahrgäste zumeist in engem Abstand über die vordere Einstiegstür erfolgt, und die Fahrgäste den Omnibus üblicherweise in weiterem Abstand über die hintere Einstiegstür verlassen. Auch ist das auf der Vorderachse lastende Gewicht des Fahrzeugaufbaus bei einem Omnibus zumeist deutlich niedriger als das auf der Hinterachse lastende Gewicht, so dass sich Änderungen der Beladung an der Vorderachse stärker bemerkbar machen. Zudem wird eine Höhenänderung der Trittschwelle beim Einsteigen von den Fahrgästen vermutlich stärker wahrgenommen als beim Aussteigen.

Der Erfindung liegt daher die Aufgabe zugrunde, ein Verfahren zur Niveauregelung eines luftgefederten Kraftfahrzeugs der eingangs genannten Art, beispielsweise eines Omnibusses, vorzustellen, mit dem auch kleinere Schwankungen des Fahrzeugaufbaus, die beim Ein- und Aussteigen von Fahrgästen insbesondere im Bereich der Trittschwellen der Einstiegstüren auftreten können, vermieden werden.

Diese Aufgabe ist erfindungsgemäß in Verbindung mit den Merkmalen des Oberbegriffs des Anspruchs 1 dadurch gelöst, dass die Fahrgeschwindigkeit und/oder der Betätigungszustand einer Feststellbremse sowie der Schließzustand der Einstiegstüren sensorisch erfasst werden, und dass zumindest eine der beiden Toleranzgrenzen der an mindestens einer Fahrzeugachse oder an einer Fahrzeugseite angeordneten Luftfederbälge dann, wenn die Fahrgeschwindigkeit eine als Fahrzeugstillstand interpretierbare Mindestfahrgeschwindigkeit unterschritten hat und/oder die Feststellbremse betätigt ist, und wenn mindestens eine der Einstiegstüren geöffnet ist, dadurch verändert wird, dass die obere Toleranzgrenze auf eine korrigierte obere Toleranzgrenze abgesenkt wird, die zwischen dem Soll-Niveau und der oberen Toleranzgrenze liegt, und/oder dass die untere Toleranzgrenze auf eine korrigierte untere Toleranzgrenze angehoben wird, die zwischen dem Soll-Niveau und der unteren Toleranzgrenze liegt.

Vorteilhafte Ausgestaltungen und Weiterbildungen des erfindungsgemäßen Verfahrens sind Gegenstand der Unteransprüche.

Die Erfindung geht demnach aus von einem an sich bekannten luftgefederten Kraftfahrzeug, insbesondere einem Omnibus, das bzw. der eine luftgefederte Vorderachse und mindestens eine luftgefederte Hinterachse sowie eine vordere Einstiegstür und mindestens eine hintere Einstiegstür aufweist. Zur Regelung eines Soll-Niveaus des Fahrzeugaufbaus ist vorgesehen, dass mehrere zwischen Fahrwerkselementen der Fahrzeugachsen und dem Fahrzeugaufbau angeordnete Luftfederbälge über als Schaltventile ausgebildete Niveauregelventile jeweils beim Unterschreiten einer unteren Toleranzgrenze belüftet und bei Überschreiten einer oberen Toleranzgrenze entlüftet werden. Beim Vorliegen eines bestimmten Betriebszustands soll zumindest eine dieser beiden Toleranzgrenzen der Luftfederbälge mindestens einer Fahrzeugachse oder einer Fahrzeugseite in geeigneter Weise verändert werden.

Der vorliegend relevante, nachfolgend als Haltestellenbetrieb bezeichnete Betriebszustand liegt dann vor, wenn das Kraftfahrzeug bzw. der Omnibus eine Haltestelle anfährt, und der Fahrer dort mindestens eine Einstiegstür öffnet, um Fahrgäste aus- und einsteigen zu lassen. Dabei kann es insbesondere an der vorderen Einstiegstür, die üblicherweise nahe der Vorderachse angeordnet ist, zu Höhenschwankungen der Trittschwelle gegenüber dem Boden kommen, die besonders von den dort einsteigenden Fahrgästen als unangenehm und störend empfunden werden. Zur Vermeidung dieses zumindest den Einstiegskomfort mindernden Effektes ist erfindungsgemäß vorgesehen, dass wenigstens eine der beiden Toleranzgrenzen der an mindestens einer Fahrzeugachse oder an einer Fahrzeugseite angeordneten Luftfederbälge dadurch verändert wird, dass die obere Toleranzgrenze auf eine korrigierte obere Toleranzgrenze abgesenkt wird, die zwischen dem Soll-Niveau und der oberen Toleranzgrenze liegt, und/oder dass die untere Toleranzgrenze auf eine korrigierte untere Toleranzgrenze angehoben wird, die zwischen dem Soll-Niveau und der unteren Toleranzgrenze liegt.

Somit wird die Toleranzbreite verringert, die durch den Abstand zwischen der unteren Toleranzgrenze und der oberen Toleranzgrenze gegeben ist, und innerhalb der eine Abweichung des Ist-Niveaus von dem Soll-Niveau nicht korrigiert wird. Hierdurch werden dann durch die Niveauregelung im Vergleich zu dem normalen Fahrbetrieb auch kleinere Abweichungen des Ist-Niveaus von dem Soll-Niveau korrigiert. Da diese Regelvorgänge mit geringen Stellwegen und kurzen Stellzeiten verbunden sind, werden diese von den Fahrgästen kaum wahrgenommen. Der betreffende Betriebszustand wird dadurch erkannt, dass die Fahrgeschwindigkeit eine als Fahrzeugstillstand interpretierbare Mindestfahrgeschwindigkeit unterschritten hat und/oder die Feststellbremse betätigt ist, und dass mindestens eine der Einstiegstüren geöffnet ist. Die entsprechende Veränderung der Toleranzgrenzen der betreffenden Luftfederbälge ist auf einfache Weise durch den vorübergehenden Ersatz der entsprechenden Werte für den normalen Fahrbetrieb durch die Werte für den Haltestellenbetrieb innerhalb des elektronischen Steuergerätes der Luftfederungsanlage realisierbar.

Im Haltestellenbetrieb kann vorgesehen sein, dass die betreffenden Toleranzgrenzen aller an der Niveauregelung beteiligten Luftfederbälge entsprechend verändert werden. Demnach brauchen Luftfederbälge an Fahrzeugachsen, die gerade nicht am Fahrbetrieb beteiligt sind, also beispielsweise mit von der Fahrbahn abgehobenen Rädern hochgezogen sind, diesbezüglich nicht beachtet werden.

Da der Einstieg der Fahrgäste aber bevorzugt und zumeist in schneller Folge über die nahe der Vorderachse angeordnete vordere Einstiegstür erfolgt, und die Luftfederung der Vorderachse aufgrund einer niedrigeren Achslast empfindlicher auf Laständerungen reagiert, ist es ausreichend, wenn im Haltestellenbetrieb nur die betreffenden Toleranzgrenzen für die an der Vorderachse angeordneten Luftfederbälge entsprechend verändert werden, und die Toleranzgrenzen für die an der mindestens einen Hinterachse angeordneten Luftfederbälge unverändert beibehalten werden.

Weil die von den Fahrgästen gegebenenfalls als störend wahrgenommenen Höhenschwankungen der Trittschwelle erfahrungsgemäß nur beim Ein- und Aussteigen über die vordere Einstiegstür auftreten, ist es möglich, dass die betreffenden Toleranzgrenzen der an der Vorderachse angeordneten Luftfederbälge nur dann entsprechend verändert werden, wenn die vordere Einstiegstür auch tatsächlich geöffnet ist.

Da die Problematik der gegebenenfalls als störend wahrgenommenen Höhenschwankungen der Trittschwellen ohnehin nur beim Ein- und Aussteigen über die üblicherweise auf der fahrbahnäußeren Fahrzeugseite angeordneten Einstiegstüren auftritt, kann alternativ auch vorgesehen sein, dass im Haltetstellenbetrieb nur die betreffenden Toleranzgrenzen der an der fahrbahnäußeren Fahrzeugseite angeordneten Luftfederbälge entsprechend verändert werden, und die Toleranzgrenzen der an der fahrbahninneren Fahrzeugseite angeordneten Luftfederbälge unverändert beibehalten werden.

Bei dieser Variante des erfindungsgemäßen Verfahrens kann auch vorgesehen sein, dass die betreffenden Toleranzgrenzen der an der fahrbahnäußeren Fahrzeugseite angeordneten Luftfederbälge nur dann entsprechend verändert werden, wenn der Fahrzeugaufbau an der fahrbahnäußeren Fahrzeugseite einseitig abgesenkt, also eine verfügbare Kneeling-Funktion aktiviert ist. Bei einseitig abgesenktem Fahrzeugaufbau liegen die durch das Aus- und Einsteigen von Fahrgästen verursachten Höhenschwankungen zwar in etwa in derselben Größenordnung wie bei angehobenem Fahrzeugaufbau, sie werden dann aber aufgrund ihres relativ großen Betrages von den einsteigenden Fahrgästen stärker wahrgenommen.

Um diesem Effekt noch stärker entgegenzuwirken, kann in Verbindung mit den zuvor erläuterten Verfahrensvarianten auch vorgesehen sein, dass zumindest eine der beiden Toleranzgrenzen der an mindestens einer Fahrzeugachse oder an einer Fahrzeugseite angeordneten Luftfederbälge dann, wenn der Fahrzeugaufbau an der fahrbahnäußeren Fahrzeugseite einseitig abgesenkt, also die Kneeling-Funktion aktiviert ist, dadurch verändert wird, dass die obere Toleranzgrenze auf eine zweite korrigierte obere Toleranzgrenze abgesenkt wird, die zwischen dem Soll-Niveau und der ersten korrigierten oberen Toleranzgrenze liegt, und/oder dass die untere Toleranzgrenze auf eine zweite korrigierte untere Toleranzgrenze angehoben wird, die zwischen dem Soll-Niveau und der ersten korrigierten unteren Toleranzgrenze liegt. Somit wird die Empfindlichkeit der Niveauregelung bei aktivierter Kneeling-Funktion gegenüber dem Haltestellenbetrieb mit angehobenem Fahrzeugaufbau nochmals erhöht.

Es versteht sich von selbst, dass bei aktivierter Kneeling-Funktion die jeweils für die auf der abgesenkten Fahrzeugseite angeordneten Luftfederbälge gültigen Toleranzgrenzen um dieselbe Höhendifferenz abgesenkt werden wie das Soll-Niveau.

Zur Verdeutlichung der Erfindung ist der Beschreibung eine Zeichnung mit mehreren Ausführungsbeispielen beigefügt. In dieser zeigt
Fig. 1 eine erste Variante der erfindungsgemäßen Niveauregelung anhand der Zeitverläufe des Ist-Niveaus und des Soll-Niveaus eines Luftfederbalgs,
Fig. 2 eine zweite Variante der erfindungsgemäßen Niveauregelung anhand der Zeitverläufe des Ist-Niveaus und des Soll-Niveaus eines Luftfederbalgs,
Fig. 3 den schematischen Aufbau einer bekannten Steuerungseinrichtung der Luftfederungsanlage eines Kraftfahrzeugs zur Anwendung des erfindungsgemäßen Verfahrens, und
Fig. 4 eine schematische Darstellung eines Omnibusses mit zwei Fahrzeugachsen sowie zwei Einstiegstüren.

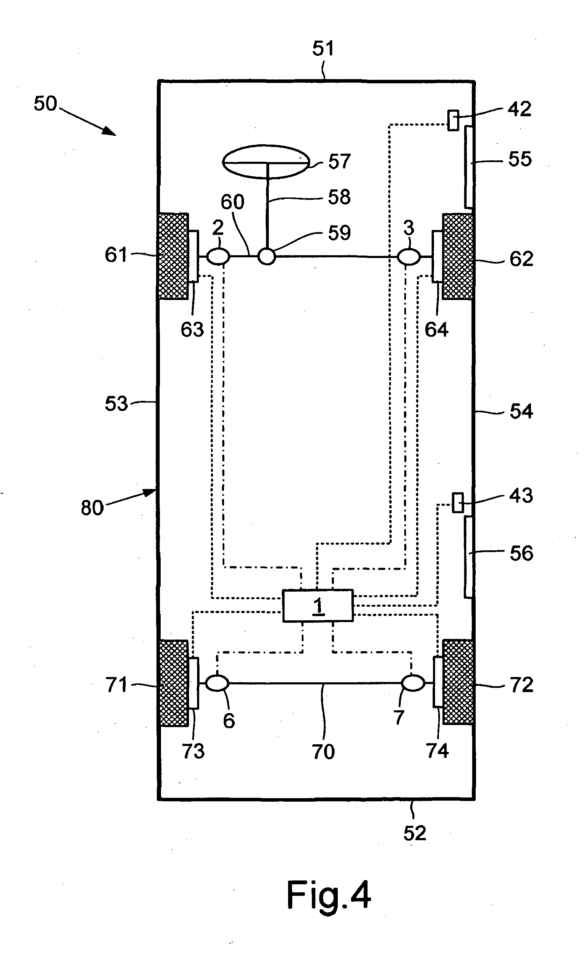

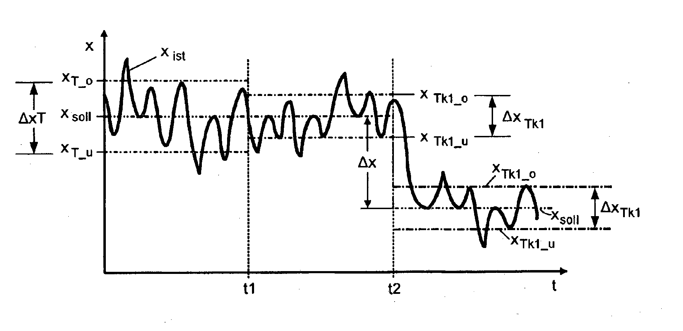

Zur besseren Orientierung wird zunächst ein in Fig. 4 dargestelltes Kraftfahrzeug, nämlich ein Omnibus 50 beschrieben, an dem eine Steuerungsvorrichtung 1 gemäß der Erfindung angeordnet ist, mit deren Hilfe ein Verfahren gemäß der Erfindung durchführbar ist. Der Omnibus 50 weist einen Fahrzeugaufbau 80 mit einer in Vorwärtsfahrtrichtung weisenden Vorderseite 51, eine in Rückwärtsfahrtrichtung weisende Hinterseite 52, eine fahrbahninnere Fahrzeugseite 53 und eine fahrbahnäußere Fahrzeugseite 54 auf. Im Bereich der Vorderseite 51 des Omnibusses 50 ist ein Lenkrad 57 angeordnet, mittels dem über eine Lenkwelle 58 und ein Lenkgetriebe 59 die Räder 61, 62 der Vorderachse 60 von einem Fahrer lenkbar sind.

Der Fahrzeugaufbau 80 wird von einer Vorderachse 60 und einer Hinterachse 70 des Omnibusses 50 getragen. An den freien Enden der Vorderachse 60 ist ein linkes Vorderrad 61 und ein rechtes Vorderrad 62 angeordnet, während an der Hinterachse 70 ein linkes Hinterrad 71 und ein rechtes Vorderrad 72 drehbar befestigt ist. An den genannten Fahrzeugrädern 61, 62, 71, 72 sind vordere rechte und linke sowie hintere rechte und linke Radbremsen 63, 64, 73, 74 angeordnet, die als Betriebsbremsen und als Feststellbremsen betätigbar sind. Hierzu weisen die genannten Radbremsen 63, 64, 73, 74 nicht dargestellte, jedoch bekannte Aktuatoren auf, die über gestrichelt gezeichnete Steuerleitungen hydraulisch, pneumatisch oder elektrisch von der Steuerungsvorrichtung 1 ansteuerbar sind.

Der Fahrzeugaufbau 80 wird über Luftfederbälge von den beiden Fahrzeugachsen 60, 70 getragen. Hierzu ist im Bereich des linken Vorderrads 61 ein linker vorderer Luftfederbalg 2, im Bereich des rechten Vorderrads 62 ein rechter vorderer Luftfederbalg 3, im Bereich des linken Hinterrads 71 ein linker hinterer Luftfederbalg 6 und im Bereich des rechten Hinterrads 72 ein rechter hinterer Luftfederbalg 7 angeordnet. Diese Luftfederbälge 2, 3, 6, 7 sind über strichpunktiert gezeichnete pneumatische Steuerleitungen mit der Steuerungsvorrichtung 1 verbunden, so dass sie von dieser bedarfsgerecht belüftet beziehungsweise entlüftet werden können.

Schließlich zeigt die Übersichtsdarstellung des Omnibusses 50 eine vordere Einstiegstür 55 und eine hintere Einstiegstür 56, deren Betätigungsstellung, also offen oder geschlossen, mittels eines der vorderen Einstiegstür 55 zugeordneten ersten Kontaktschalters 42 und mittels eines der hinteren Einstiegstür 56 zugeordneten zweiten Kontaktschalters 43 feststellbar ist. Die Signale der beiden Kontaktschalter 42, 43 werden der Steuerungsvorrichtung 1 über gestrichelt gezeichnete Signalleitungen zur Verfügung gestellt.

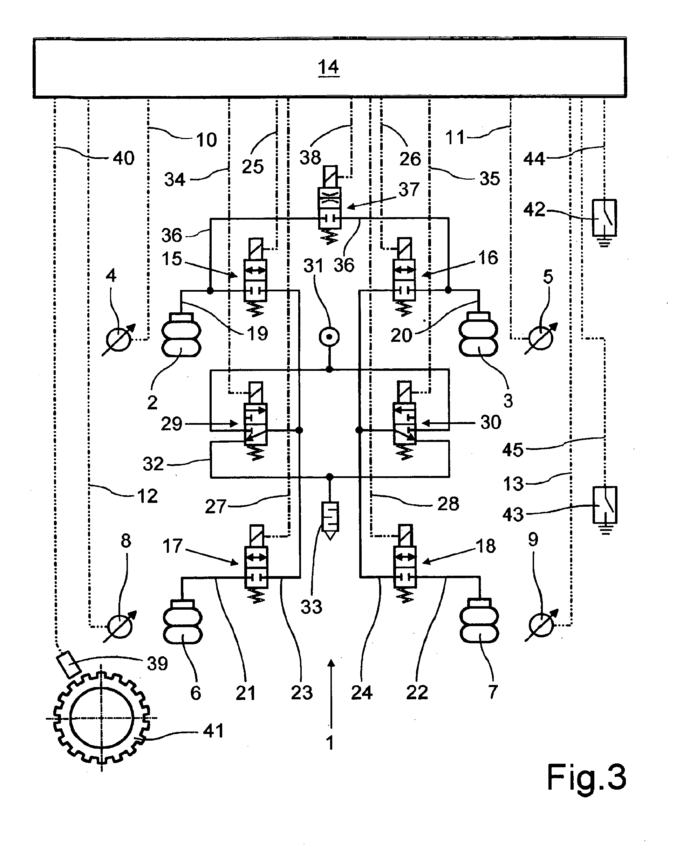

Fig. 3 zeigt in detaillierter Form den an sich bekannten Aufbau der bereits mehrfach erwähnten Steuerungseinrichtung 1 der Luftfederungsanlage des Omnibusses 50, bei der das erfindungsgemäße Verfahren zur Niveauregelung anwendbar ist. Demzufolge sind an der Vorderachse 60 nahe des linken Vorderrades 61 und nahe des rechten Vorderrades 62 zwischen jeweils einem Fahrwerkselement und dem Fahrzeugaufbau 80 ein linker vorderer Luftfederbalg 2 und ein rechter vorderer Luftfederbalg 3 sowie jeweils ein Wegsensor 4, 5 angeordnet. Ebenso sind an der Hinterachse 70 nahe des linken Hinterrades 71 und nahe des rechten Hinterrades 72 zwischen jeweils einem Fahrwerkselement und dem Fahrzeugaufbau 80 jeweils ein linker hinterer Luftfederbalg 6 und ein rechter hinterer Luftfederbalg 7 sowie jeweils ein Wegsensor 8, 9 angeordnet. Mittels des Luftdrucks und der Druckluftmenge in dem jeweiligen Luftfederbalg 2, 3, 6, 7 ist der vertikale Abstand zwischen dem betreffenden Fahrwerkselement sowie dem Fahrzeugaufbau 80 und somit die Bodenfreiheit des Omnibusses 50 an dem betreffenden Fahrzeugrad einstellbar. Diese Abstände sind durch die jeweiligen Wegsensoren 4, 5, 8, 9 erfassbar und über zugeordnete Signalleitungen 10, 11, 12, 13 an ein elektronisches Steuergerät 14 übertragbar.

Zum Be- und Entlüften ist jedem der Luftfederbälge 2, 3, 6, 7 ein Niveauregelventil 15, 16, 17, 18 zugeordnet, über das jeweils eine Anschlussleitung 19, 20, 21, 22 des betreffenden Luftfederbalgs 2, 3, 6, 7 mit einer zugeordneten Hauptleitung 23, 24 verbindbar ist. Die Niveauregelventile 15, 16, 17, 18 sind als 2/2-Wege-Magnetschaltventile ausgebildet, die jeweils in einer ersten Schaltstellung (Ruhestellung) geschlossen und in einer zweiten Schaltstellung (Betätigungsstellung) geöffnet sind. Zur Betätigung der Niveauregelventile 15, 16, 17, 18 stehen deren Elektromagneten jeweils über eine Steuerleitung 25, 26, 27, 28 mit dem Steuergerät 14 in Verbindung. Um das einseitige Absenken des Fahrzeugaufbaus 80 (Kneeling-Funktion) zu ermöglichen, sind die auf der fahrbahninneren Fahrzeugseite 53 angeordneten Luftfederbälge 2, 6 über die zugeordneten Niveauregelventile 15, 17 mit einer ersten Hauptleitung 23 und die auf der fahrbahnäußeren Fahrzeugseite 54 angeordneten Luftfederbälge 3, 7 über die zugeordneten Niveauregelventile 16, 18 mit einer zweiten Hauptleitung 24 verbindbar.

Die beiden Hauptleitungen 23, 24 sind über jeweils ein zugeordnetes erstes bzw. zweites Hauptschaltventil 29, 30 wechselweise mit einer Druckluftquelle 31 oder einer Druckluftsenke verbindbar. Bei der vorliegend nur symbolisch dargestellten Druckluftquelle 31 handelt es sich bevorzugt um eine mit einem Kompressor und/oder einem Druckspeicher in Verbindung stehende Druckleitung. Die Druckluftsenke ist vorliegend aus einer über einen Schalldämpfer 33 in die Umgebung führenden Drucklosleitung 32 gebildet. Die beiden Hauptschaltventile 29, 30 sind jeweils als ein 3/2-Wege-Magnetschaltventil ausgebildet, über das die jeweilige Hauptleitung 23, 24 in einer ersten Schaltstellung (Ruhestellung) mit der Druckluftsenke und in einer zweiten Schaltstellung (Betätigungsstellung) mit der Druckluftquelle 31 in Verbindung steht. Zur Betätigung der Hauptschaltventile 29, 30 stehen deren Elektromagneten jeweils über eine Steuerleitung 34, 35 mit dem Steuergerät 14 in Verbindung.

Zur Dämpfung von Wankbewegungen des Fahrzeugaufbaus 80 sind die Anschlussleitungen 19, 20 der an der Vorderachse 60 angeordneten Luftfederbälge 2, 3 über eine Verbindungsleitung 36 und ein Drosselventil 37 miteinander verbindbar. Das Drosselventil 36 ist als ein 2/2-Wege-Magnetschaltventil ausgebildet, durch das die Verbindungsleitung 36 in einer ersten Schaltstellung (Ruhestellung) abgesperrt ist, und durch das die beiden Abschnitte der Verbindungsleitung 36 in einer zweiten Schaltstellung (Betätigungsstellung) gedrosselt miteinander verbunden sind. Zur Betätigung des Drosselventils 37 steht dessen Elektromagnet über eine Steuerleitung 38 mit dem Steuergerät 14 in Verbindung.

Zur Erfassung der aktuellen Fahrgeschwindigkeit ist ein über eine Signalleitung 40 mit dem Steuergerät 14 verbundener Drehzahlsensor 39 vorgesehen, der an einem Geberrad 41 angeordnet ist. Das Geberrad 41 ist an einem Bauteil des Omnibusses 50, wie der Nabe eines Fahrzeugrades oder der Ausgangswelle des Fahrgetriebes, angeordnet, das im Fahrbetrieb proportional zur Fahrgeschwindigkeit rotiert. Alternativ dazu kann die Fahrgeschwindigkeit auch über ein CAN-Bus-Signal zur Verfügung gestellt werden.

Zur Registrierung des Schließzustands der vorderen und hinteren Einstiegstür 55, 56 ist jeweils der mit der betreffenden Einstiegstür 55, 56 in Wirkverbindung stehender vorderer bzw. hinterer Kontaktschalter 42, 43 vorgesehen, der jeweils bei geöffneter vorderer bzw. hinterer Einstiegstür 55, 56 geschlossen ist und über eine zugeordnete erste bzw. zweite Signalleitung 44, 45 mit dem Steuergerät 14 in Verbindung steht.

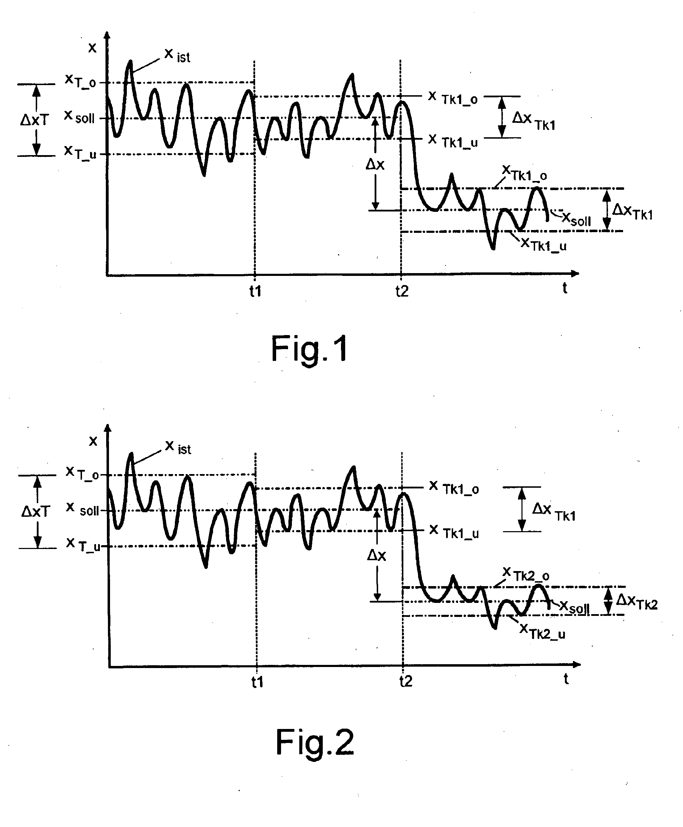

Nachfolgend wird das erfindungsgemäße Verfahren in zwei Varianten anhand der Diagramme der Figuren 1 und 2 beispielhaft für die Radaufhängung des rechten Vorderrades 62 bzw. den diesem zugeordneten Luftfederbalg 3 erläutert. Die Diagramme zeigen jeweils den Zeitverlauf des Ist-Niveaus xᵢₛₜ(t) und des Soll-Niveaus xₛₒₗₗ(t) an dem betreffenden Luftfederbalg 3 des rechten Vorderrads 62 beim Übergang von einem normalen Fahrbetrieb (t < t1) in den Haltestellenbetrieb (t ≥ t1) und bei während des Haltestellenbetriebs aktivierter Kneeling-Funktion (t ≥ t2).

Im normalen Fahrbetrieb wird das über den dem rechten Vorderrad 62 bzw. dem rechten vorderen Luftfederbalg 3 zugeordneten Wegsensor 5 erfasste Ist-Niveau xᵢₛₜ unter Berücksichtigung des durch die untere Toleranzgrenze x_{T_u} und die obere Toleranzgrenze x_{T_o} begrenzte Toleranzband ΔxT auf das Soll-Niveau xₛₒₗₗ eingeregelt. Hierzu wird der rechte vordere Luftfederbalg 3 belüftet, sobald das Ist-Niveau xᵢₛₜ die untere Toleranzgrenze x_{T_u} unterschritten hat, und entlüftet, sobald das Ist-Niveau xᵢₛₜ die obere Toleranzgrenze x_{T_o} überschritten hat.

Zur Belüftung des rechten vorderen Luftfederbalges 3 wird zunächst durch die Betätigung des zugeordneten zweiten Hauptschaltventils 30 die zweite Hauptleitung 24 mit der Druckluftquelle 31 verbunden und anschließend durch die Betätigung des dem rechten vorderen Luftfederbalg 3 zugeordneten Niveauregelventils 16 die Anschlussleitung 20 des rechten vorderen Luftfederbalgs 3 so lange mit der zweiten Hauptleitung 24 verbunden, bis das Ist-Niveau xᵢₛₜ das Soll-Niveau xₛₒₗₗ weitgehend erreicht hat. Zur Entlüftung des rechten vorderen Luftfederbalgs 3 wird durch die Betätigung des dem rechten vorderen Luftfederbalg 3 zugeordneten Niveauregelventils 16 die Anschlussleitung 20 des rechten vorderen Luftfederbalgs 3 so lange mit der im Ruhezustand drucklos geschalteten zweiten Hauptleitung 24 verbunden, bis das Ist-Niveau xᵢₛₜ das Soll-Niveau xₛₒₗₗ weitgehend erreicht hat. Die beiden Toleranzgrenzen x_{T_u}, x_{T_o} sind so gewählt, dass sich im normalen Fahrbetrieb ein optimaler Kompromiss zwischen Fahrsicherheit, Fahrkomfort und Druckluftverbrauch ergibt.

Zum Zeitpunkt t = t1 wird dann der Haltestellenbetrieb des Omnibusses 50 erkannt, bei dem mit dem Ein- und Aussteigen von Fahrgästen zu rechnen ist. Der Haltestellenbetrieb kann zum Beispiel dadurch erkannt werden, dass die über den Drehzahlsensor 39 erfasste Fahrgeschwindigkeit eine vorgegebene Mindestfahrgeschwindigkeit unterschritten hat, und dass die vordere und/oder die hintere Einstiegstür 55, 56 geöffnet ist, was über den zugeordneten vorderen und hinteren Kontaktschalter 42, 43 ermittelbar ist. Zur Erhöhung der Empfindlichkeit der Niveauregelung werden im Haltestellenbetrieb die Toleranzgrenzen x_{T_u}, x_{T_o} durch korrigierte Toleranzgrenzen x_{Tk1_u}, x_{Tk1_o} ersetzt, die jeweils zwischen dem Soll-Niveau xₛₒₗₗ und der entsprechend zugeordneten Toleranzgrenze x_{T_u}, x_{T_o} liegen (xₛₒₗₗ > x_{Tk1_u} > x_{T_u}; xₛₒₗₗ < x_{Tk1_o} < X_{T_o}). In Fig. 1 ist deutlich erkennbar, dass die Breite des Toleranzbandes ΔxT größer ist als die Breite des einmalig korrigierten Toleranzbandes Δx_{Tk1}. Durch das derart eingeengte Toleranzband Δx_{Tk1} der Niveauregelung werden nun auch kleinere Abweichungen des Ist-Niveaus xᵢₛₜ von dem Soll-Niveau xₛₒₗₗ korrigiert und damit größere Höhenschwankungen an der Trittschwelle der vorderen Einstiegstür 55 vermieden, die besonders von dort einsteigenden Fahrgästen als störend empfunden werden.

Zum Zeitpunkt t = t2 wird die bereits mehrfach erwähnte Kneeling-Funktion aktiviert, durch die der Fahrzeugaufbau 80 auf der fahrbahnäußeren Fahrzeugseite 54, hier der rechten Fahrzeugseite, abgesenkt wird. Hierdurch wird das Soll-Niveau xₛₒₗₗ des rechten vorderen Luftfederbalgs 3 um die Höhendifferenz Δx abgesenkt und das Ist-Niveau xᵢₛₜ durch die Niveauregelung entsprechend nachgeführt. In der Verfahrensvariante gemäß Fig. 1 werden die zuvor gültigen korrigierten Toleranzgrenzen x_{Tk1_u}, x_{Tk1_o} ebenfalls um die Höhendifferenz Δx abgesenkt und somit in ihrer Wirkung unverändert beibehalten.

In der Verfahrensvariante gemäß Fig. 2 wird dagegen die Empfindlichkeit der Niveauregelung bei aktivierter Kneeling-Funktion (t ≥ t2) weiter erhöht. Hierzu werden die entsprechend Fig. 1 um die Höhendifferenz Δx abgesenkten ersten korrigierten Toleranzgrenzen x_{Tk1_u}, x_{Tk1_o} durch zweite korrigierte Toleranzgrenzen x_{Tk2_u}, x_{Tk2_o} ersetzt, die jeweils zwischen dem Soll-Niveau xₛₒₗₗ und der entsprechenden ersten korrigierten Toleranzgrenze x_{Tk1_u}, x_{Tk1_o} liegen. Somit werden dann bei aktivierter Kneeling-Funktion auch kleinere Abweichungen des Ist-Niveaus xᵢₛₜ von dem Soll-Niveau xₛₒₗₗ korrigiert und damit auch geringere Höhenschwankungen an der Trittschwelle der vorderen Einstiegstür 55, 56 verhindert. In Fig. 2 ist deutlich erkennbar, dass die Breite des einmalig korrigierten Toleranzbandes Δx_{Tk1} größer ist als die Breite des zweifach korrigierten Toleranzbandes Δx_{Tk2}.

Sofern vorgesehen ist, dass im Haltestellenbetrieb die Empfindlichkeit der Niveauregelung nur der an der Vorderachse 60 angeordneten vorderen linken und rechten Luftfederbälge 2, 3 erhöht wird, erfolgt die Änderung der Toleranzgrenzen x_{T_u}, x_{T_o} des der Radaufhängung des linken Vorderrades 61 zugeordneten linken vorderen Luftfederbalgs 2 im Prinzip analog zu der in den Figuren 1 und 2 für den rechten vorderen Luftfederbalg 3 dargestellten Vorgehensweise, jedoch ohne die Einstellung einer weiter erhöhten Empfindlichkeit bei aktivierter Kneeling-Funktion nach Fig. 2. Wenn dagegen vorgesehen ist, dass im Haltestellenbetrieb die Empfindlichkeit der Niveauregelung nur der an der fahrbahnäußeren Fahrzeugseite 54, vorliegend an der rechten Fahrzeugseite angeordneten rechten vorderen und rechten hinteren Luftfederbälge 3, 7 erhöht wird, kann die Änderung der Toleranzgrenzen x_{T_u}, x_{T_o} des der Radaufhängung des rechten Hinterrades 72 zugeordneten rechten hinteren Luftfederbalgs 7 völlig identisch zu der in den Figuren 1 und 2 für den rechten vorderen Luftfederbalg 3 dargestellten Vorgehensweise erfolgen.

In den Figuren 1 und 2 sind die Abstände der Toleranzgrenzen x_{T_u}, x_{T_o} und der korrigierten Toleranzgrenzen (x_{Tk1_u}, x_{Tk1_o}; x_{Tk2_u}, x_{Tk2_o}) zu dem Soll-Niveau xₛₒₗₗ beispielhaft jeweils gleich groß festgelegt, so dass das durch diese Toleranzgrenzen begrenzte Toleranzband bezüglich des Soll-Niveaus xₛₒₗₗ jeweils symmetrisch ausgerichtet ist. Zur Erzielung eines differenzierten Regelverhaltens der Niveauregelung ist es jedoch grundsätzlich auch möglich, dass die Abstände der Toleranzgrenzen x_{T_u}, x_{T_o} und/oder der korrigierten Toleranzgrenzen (x_{Tk1_u}, x_{Tk1_o}; x_{Tk2_u}, x_{Tk2_o}) zu dem Soll-Niveau xₛₒₗₗ jeweils unterschiedlich groß definiert sind, und dass das durch diese Toleranzgrenzen begrenzte Toleranzband bezüglich des Soll-Niveaus xₛₒₗₗ dann jeweils asymmetrisch ausgerichtet ist.

### Bezugszeichenliste (Bestandteil der Beschreibung)

- 1: Steuerungseinrichtung
- 2: Luftfederbalg
- 3: Luftfederbalg
- 4: Wegsensor am Luftfederbalg 2
- 5: Wegsensor am Luftfederbalg 3
- 6: Luftfederbalg
- 7: Luftfederbalg
- 8: Wegsensor am Luftfederbalg 6
- 9: Wegsensor am Luftfederbalg 7
- 10: Signalleitung von Wegsensor 4
- 11: Signalleitung von Wegsensor 5
- 12: Signalleitung von Wegsensor 8
- 13: Signalleitung von Wegsensor 9
- 14: Steuergerät
- 15: Niveauregelventil von Luftfederbalg 2
- 16: Niveauregelventil von Luftfederbalg 3
- 17: Niveauregelventil von Luftfederbalg 6
- 18: Niveauregelventil von Luftfederbalg 7
- 19: Anschlussleitung von Luftfederbalg 2
- 20: Anschlussleitung von Luftfederbalg 3
- 21: Anschlussleitung von Luftfederbalg 6
- 22: Anschlussleitung von Luftfederbalg 7
- 23: Erste Hauptleitung
- 24: Zweite Hauptleitung
- 25: Steuerleitung von Niveauregelventil 15
- 26: Steuerleitung von Niveauregelventil 16
- 27: Steuerleitung von Niveauregelventil 17
- 28: Steuerleitung von Niveauregelventil 18
- 29: Erstes Hauptschaltventil
- 30: Zweites Hauptschaltventil
- 31: Druckluftquelle
- 32: Drucklosleitung
- 33: Schalldämpfer
- 34: Steuerleitung des ersten Hauptschaltventils 29
- 35: Steuerleitung des zweiten Hauptschaltventils 30
- 36: Verbindungsleitung
- 37: Drosselventil
- 38: Steuerleitung des Drosselventils 37
- 39: Drehzahlsensor
- 40: Signalleitung von Drehzahlsensor 39
- 41: Geberrad
- 42: Kontaktschalter
- 43: Kontaktschalter
- 44: Erste Signalleitung (vom Kontaktschalter 42)
- 45: Zweite Signalleitung (vom Kontaktschalter 43)
- 50: Omnibus, Kraftfahrzeug
- 51: Vorderseite des Omnibusses
- 52: Hinterseite des Omnibusses
- 53: Fahrbahninnere Seite des Omnibusses
- 54: Fahrbahnäußere Seite des Omnibusses
- 55: Vordere Einstiegstür
- 56: Hintere Einstiegstür
- 57: Lenkrad
- 58: Lenksäule
- 59: Lenkgetriebe
- 60: Vorderachse
- 61: Linkes Vorderrad
- 62: Rechtes Vorderrad
- 63: Radbremse, Feststellbremse vorne links
- 64: Radbremse, Feststellbremse vorne rechts
- 70: Hinterachse
- 71: Linkes Hinterrad
- 72: Rechtes Hinterrad
- 73: Radbremse, Feststellbremse hinten links
- 74: Radbremse, Feststellbremse hinten rechts
- 80: Fahrzeugaufbau
- x: Fahrwerksniveau
- xᵢₛₜ: Ist-Niveau
- xₛₒₗₗ: Soll-Niveau
- x_{T_o}: Obere Toleranzgrenze
- x_{T_u}: Untere Toleranzgrenze
- x_{Tk1_o}: Erste korrigierte obere Toleranzgrenze
- x_{Tk1_u}: Erste korrigierte untere Toleranzgrenze
- x_{Tk2_o}: Zweite korrigierte obere Toleranzgrenze
- x_{Tk2_u}: Zweite korrigierte untere Toleranzgrenze
- ΔxT: Toleranzband, unkorrigiert
- Δx_{Tk1}: Toleranzband, einfach korrigiert
- Δx_{Tk2}: Toleranzband, zweifach korrigiert
- t: Zeit
- t1: Zeitpunkt
- t2: Zeitpunkt
- Δx: Höhendifferenz

## Patentansprüche

1. Verfahren zur Niveauregelung eines luftgefederten Kraftfahrzeugs, beispielsweise eines Omnibusses (50), das eine luftgefederte Vorderachse (60) und mindestens eine luftgefederte Hinterachse (70) sowie eine vordere Einstiegstür (55) und mindestens eine hintere Einstiegstür (56) aufweist, und bei dem mehrere zwischen Fahrwerkselementen der Fahrzeugachsen (60, 70) und dem Fahrzeugaufbau (80) angeordnete Luftfederbälge (2, 3, 6, 7) zur Regelung eines Soll-Niveaus (xₛₒₗₗ) über als Schaltventile ausgebildete Niveauregelventile (15, 16, 17, 18) jeweils beim Unterschreiten einer unteren Toleranzgrenze (x_{T-u}) belüftet und beim Überschreiten einer oberen Toleranzgrenze (x_{T_o}) entlüftet werden, wobei beim Vorliegen eines bestimmten Betriebszustands zumindest eine der beiden Toleranzgrenzen (x_{T_u}, x_{T_o}) der Luftfederbälge (2, 3, 6, 7) mindestens einer Fahrzeugachse (60, 70) oder einer Fahrzeugseite (53, 54) in geeigneter Weise verändert wird, **dadurch gekennzeichnet, dass** die Fahrgeschwindigkeit und/oder der Betätigungszustand einer Feststellbremse (63, 64, 73, 74) sowie der Schließzustand der Einstiegstüren (55, 56) sensorisch erfasst werden, und dass zumindest eine der beiden Toleranzgrenzen (x_{T_u}, x_{T_o}) der an mindestens einer Fahrzeugachse (60, 70) oder an einer Fahrzeugseite (53, 54) angeordneten Luftfederbälge (2, 3; 6, 7) dann, wenn die Fahrgeschwindigkeit eine als Fahrzeugstillstand interpretierbare Mindestfahrgeschwindigkeit unterschritten hat und/oder die Feststellbremse (63, 64, 73, 74) betätigt ist, und wenn mindestens eine der Einstiegstüren (55, 56) geöffnet ist, dadurch verändert wird, dass die obere Toleranzgrenze (x_{T_o}) auf eine korrigierte obere Toleranzgrenze (x_{Tk1_o}) abgesenkt wird, die zwischen dem Soll-Niveau (xₛₒₗₗ) und der oberen Toleranzgrenze (x_{T_o}) liegt, und/oder dass die untere Toleranzgrenze (x_{T_u}) auf eine korrigierte untere Toleranzgrenze (x_{Tk1_u}) angehoben wird, die zwischen dem Soll-Niveau (xₛₒₗₗ) und der unteren Toleranzgrenze (x_{T_u}) liegt.

2. Verfahren nach Anspruch 1, **dadurch gekennzeichnet, dass** die betreffenden Toleranzgrenzen (x_{T_u}, x_{T_o}) aller an der Niveauregelung beteiligten Luftfederbälge (2, 3, 6, 7) entsprechend verändert werden.

3. Verfahren nach Anspruch 1, **dadurch gekennzeichnet, dass** nur die betreffenden Toleranzgrenzen (x_{T_u}, x_{T_o}) der an der Vorderachse (60) angeordneten Luftfederbälge (2, 3) entsprechend verändert werden, und die Toleranzgrenzen (x_{T_u}, x_{T_o}) der an der mindestens einen Hinterachse (70) angeordneten Luftfederbälge (6, 7) unverändert beibehalten werden.

4. Verfahren nach Anspruch 3, **dadurch gekennzeichnet, dass** die betreffenden Toleranzgrenzen (x_{T_u}, x_{T_o}) der an der Vorderachse (60) angeordneten Luftfederbälge (2, 3) nur dann entsprechend verändert werden, wenn die vordere Einstiegstür (55) geöffnet ist.

5. Verfahren nach Anspruch 1, **dadurch gekennzeichnet, dass** nur die betreffenden Toleranzgrenzen (x_{T_u}, x_{T_o}) der an der fahrbahnäußeren Fahrzeugseite (54) angeordneten Luftfederbälge (3, 7) entsprechend verändert werden, und die Toleranzgrenzen (x_{T_u}, x_{T_o}) der an der fahrbahninneren Fahrzeugseite (53) angeordneten Luftfederbälge (2, 6) unverändert beibehalten werden.

6. Verfahren nach Anspruch 5, **dadurch gekennzeichnet, dass** die betreffenden Toleranzgrenzen (x_{T_u}, x_{T_o}) der an der fahrbahnäußeren Fahrzeugseite (54) angeordneten Luftfederbälge (3, 7) nur dann entsprechend verändert werden, wenn der Fahrzeugaufbau (80) an der fahrbahnäußeren Fahrzeugseite (54) einseitig abgesenkt ist.

7. Verfahren nach einem der Ansprüche 1 bis 6, **dadurch gekennzeichnet, dass** zumindest eine der beiden Toleranzgrenzen (x_{T_u}, x_{T_o}) der an mindestens einer Fahrzeugachse oder an einer Fahrzeugseite angeordneten Luftfederbälge (2, 3, 6, 7) dann, wenn der Fahrzeugaufbau (80) an der fahrbahnäußeren Fahrzeugseite (54) einseitig abgesenkt ist, dadurch verändert wird, dass die obere Toleranzgrenze (x_{T_o}) auf eine zweite korrigierte obere Toleranzgrenze (x_{Tk2_o}) abgesenkt wird, die zwischen dem Soll-Niveau (xₛₒₗₗ) und der ersten korrigierten oberen Toleranzgrenze (x_{Tk1_o}) liegt, und/oder dass die untere Toleranzgrenze (x_{T_u}) auf eine zweite korrigierte untere Toleranzgrenze (x_{Tk2_u}) angehoben wird, die zwischen dem Soll-Niveau (xₛₒₗₗ) und der ersten korrigierten unteren Toleranzgrenze (x_{Tk1_u}) liegt.

## Claims

1. Method for the level adjustment of a motor vehicle with a pneumatic suspension, for example a bus (50) which has a front axle (60) with pneumatic suspension and at least one rear axle (70) with pneumatic suspension as well as a front entry door (55) and at least one rear entry door (56), and in which a plurality of air-spring bellows (2, 3, 6, 7), arranged between the chassis elements of the vehicle axles (60, 70) and the vehicle body (80) for regulating a setpoint level (Xₛₑₜₚ) by means of level-regulating valves (15, 16, 17, 18) embodied as switching valves, are ventilated whenever a lower tolerance limit (x_{T_u}) is undershot, and vented when an upper tolerance level (x_{T_o}) is exceeded, wherein when a specific operating state is present at least one of the two tolerance limits (x_{T_u}, x_{T_o}) of the air-spring bellows (2, 3, 6, 7) of at least one vehicle axle (60, 70) or a vehicle side (53, 54) is changed in a suitable way, **characterized in that** the velocity and/or the stator activation of a parking brake (63, 64, 73, 74) and the closed state of the entry doors (55, 56) are detected by sensor, and **in that** at least one of the two tolerance limits (x_{T_u}, x_{T_o}) of the air-spring bellows (2, 3; 6, 7) which are arranged on at least one vehicle axle (60, 70) or on a vehicle side (53, 54), is changed, when the velocity has undershot a minimum velocity which can be interpreted as a stationary state of the vehicle and/or the parking brake (63, 64, 73, 74) is activated and if at least one of the entry doors (55, 56) is opened, **in that** the upper tolerance limit (x_{T_o}) is reduced to a corrected, upper tolerance limit (x_{Tk1_o}) which lies between the setpoint level (xₛₑₜₚ) and the upper tolerance limit (x_{T_o}), and/or **in that** the lower tolerance limit (x_{T_u}) is raised to a corrected, lower tolerance limit (x_{Tk1_u}) which lies between the setpoint level (xₛₑₜₚ) and the lower tolerance level (x_{T_u}).

2. Method according to Claim 1, **characterized in that** the respective tolerance limits (x_{T_u}, x_{T_o}) of all the air-spring bellows (2, 3, 6, 7) which are involved in the level-regulating process are correspondingly changed.

3. Method according to Claim 1, **characterized in that** only the respective tolerance limits (x_{T_u}, X_{T_o}) of the air-spring bellows (2, 3) which are arranged on the front axle (60) are correspondingly changed and the tolerance limits (x_{T_u}, x_{T_o}) of the air-spring bellows (6, 7), which are arranged on the at least one rear axle (70), are retained without modification.

4. Method according to Claim 3, **characterized in that** the respective tolerance limits (x_{T_u}, x_{T_o}) of the air-spring bellows (2, 3), which are arranged on the front axle (60), are correspondingly changed only when the front entry door (55) is opened.

5. Method according to Claim 1, **characterized in that** only the respective tolerance limits (x_{T_u}, x_{T_o}) of the air-spring bellows (3, 7) which are arranged on the vehicle side (54) on the outside of the carriageway are correspondingly changed, and the tolerance limits (x_{T_u}, x_{T_o}) of the air-spring bellows (2, 6), which are arranged on the vehicle side (53) on the inside of the carriageway, are retained without modification.

6. Method according to Claim 5, **characterized in that** the respective tolerance limits (x_{T_u}, x_{T_o}) of the air-spring bellows (3, 7) which are arranged on the vehicle side (54) on the outside of the carriageway are correspondingly changed only when the vehicle body (80) is lowered on one side, on the vehicle side (54) on the outside of the carriageway.

7. Method according to one of Claims 1 to 6, **characterized in that** at least one of the two tolerance limits (x_{T_u}, x_{T_o}) of the air-spring bellows (2, 3, 6, 7), which are arranged on at least one vehicle axle or on a vehicle side, when the vehicle body (80) is lowered on one side, on the vehicle side (54) on the outside of the carriageway, is changed **in that** the upper tolerance limit (x_{T_o}) is reduced to a second corrected, upper tolerance limit (x_{Tk2_o}), which lies between the setpoint level (xₛₑₜₚ) and the first corrected, upper tolerance limit (x_{Tk1_o}), and/or **in that** the lower tolerance limit (x_{T_u}) is raised to a second corrected, lower tolerance limit (x_{Tk2_u}) which lies between the setpoint level (xₛₑₜₚ) and the first corrected, lower tolerance limit (x_{Tk1_u}).

## Revendications

1. Procédé de réglage du niveau d'un véhicule automobile à suspension pneumatique, par exemple d'un omnibus (50) qui présente un essieu avant à suspension pneumatique (60) et au moins un essieu arrière à suspension pneumatique (70) ainsi qu'une porte d'accès avant (55) et au moins une porte d'accès arrière (56), et dans lequel plusieurs soufflets pneumatiques (2, 3, 6, 7) disposés entre des éléments du train de roulement des essieux du véhicule (60, 70) et la caisse du véhicule (80) pour la régulage d'un niveau de consigne (Xₛₒₗₗ) par le biais de soupapes de régulation de niveau (15, 16, 17, 18) réalisées sous forme de soupapes de commutation sont aérés à chaque fois lors d'un dépassement par le bas d'une limite de tolérance inférieure (X_{T_u}) et sont désaérés dans le cas d'un dépassement par le haut d'une limite de tolérance supérieure (X_{T_o}), et, en présence d'un état de fonctionnement déterminé, au moins l'une des deux limites de tolérance (X_{T_u}, X_{T_o}) des soufflets pneumatiques (2, 3, 6, 7) d'au moins un essieu du véhicule (60, 70) ou d'un côté du véhicule (53, 54) étant modifiée de manière appropriée, **caractérisé en ce que** la vitesse de conduite et/ou l'état d'actionnement d'un frein de stationnement (63, 64, 73, 74) ainsi que l'état de fermeture des portes d'accès (55, 56) sont détectés par des capteurs, et **en ce qu'**au moins l'une des deux limites de tolérance (X_{T_u}, X_{T_o}) des soufflets pneumatiques (2, 3 ; 6, 7) disposés au niveau d'au moins un essieu du véhicule (60, 70) ou au niveau d'au moins un côté du véhicule (53, 54), lorsque la vitesse de conduite est passée en dessous d'une vitesse de conduite minimale pouvant être interprétée comme un arrêt du véhicule et/ou que le frein du stationnement (63, 64, 73, 74) est actionné, et quand au moins l'une des portes d'accès (55, 56) est ouverte, est modifiée de telle sorte que la limite de tolérance supérieure (X_{T_o}) soit abaissée à une limite de tolérance supérieure corrigée (X_{Tk1_o}) qui est située entre le niveau de consigne (X_{Soll}) et la limite de tolérance supérieure (X_{T_o}), et/ou que la limite de tolérance inférieure (X_{T_u}) soit augmentée à une limite de tolérance inférieure corrigée (X_{Tk1_u}) qui est située entre le niveau de consigne (Xₛₒₗₗ) et la limite de tolérance inférieure (X_{T_u}).

2. Procédé selon la revendication 1, **caractérisé en ce que** les limites de tolérance concernées ((X_{T_u}, X_{T_o}) de tous les soufflets pneumatiques (2, 3, 6, 7) participant au néglage du niveau sont modifiées de manière correspondante.

3. Procédé selon la revendication 1, **caractérisé en ce que** seules les limites de tolérance concernées (X_{T_u}, X_{T_o}) des soufflets pneumatiques (2, 3) disposés au niveau de l'essieu avant (60) sont modifiées en conséquence et les limites de tolérance (X_{T_u}, X_{T_o}) des soufflets pneumatiques (6, 7) disposés au niveau de l'au moins un essieu arrière (70) sont conservées sans modification.

4. Procédé selon la revendication 3, **caractérisé en ce que** les limites de tolérance concernées (X_{T_u}, X_{T_o}) des soufflets pneumatiques (2, 3) disposés au niveau de l'essieu avant (60) sont modifiées en conséquence seulement lorsque la porte d'accès avant (55) est ouverte.

5. Procédé selon la revendication 1, **caractérisé en ce que** seules les limites de tolérance concernées (X_{T_u}, X_{T_o}) des soufflets pneumatiques (3, 7) disposés au niveau du côté du véhicule (54) extérieur à la chaussée sont modifiées en conséquence et les limites de tolérance (X_{T_u}, X_{T_o}) des soufflets pneumatiques (2, 6) disposés au niveau du côté du véhicule (53) interne à la chaussée sont conservées sans modification.

6. Procédé selon la revendication 5, **caractérisé en ce que** les limites de tolérance concernées (X_{T_u}, X_{T_o}) des soufflets pneumatiques (3, 7) disposés au niveau du côté du véhicule (54) extérieur à la chaussée sont seulement modifiées en conséquence lorsque la caisse du véhicule (80) est abaissée d'un côté au niveau du côté du véhicule (54) extérieur à la chaussée.

7. Procédé selon l'une quelconque des revendications 1 à 6, **caractérisé en ce qu'**au moins l'une des deux limites de tolérance (X_{T_u}, X_{T_o}) des soufflets pneumatiques (2, 3, 6, 7) disposés au niveau d'au moins un essieu du véhicule ou au niveau d'un côté du véhicule est modifiée lorsque la caisse du véhicule (80) est abaissée d'un côté au niveau du côté du véhicule (54) extérieur à la chaussée, par le fait que la limite de tolérance supérieure (X_{T_o}) est abaissée à une deuxième limite de tolérance supérieure corrigée (X_{Tk2_o}) qui se situe entre le niveau de consigne (Xₛₒₗₗ) et la première limite de tolérance supérieure corrigée (X_{Tk1_o}), et/ou que la limite de tolérance inférieure (X_{T_u}) est augmentée à une deuxième limite de tolérance inférieure corrigée (X_{Tk2_u}) qui se situe entre le niveau de consigne (X_{Soll}) et la première limite de tolérance inférieure corrigée (X_{Tk1_u}).
